# EUROPÄISCHE PATENTSCHRIFT

(11) **EP 4 126 540 B1**
(45) Veröffentlichungstag und Bekanntmachung des Hinweises auf die Patenterteilung: **07.05.2025**
(21) Anmeldenummer: 21718515.6
(22) Anmeldetag: 30.03.2021
(51) Int. Cl.: B32B 17/10, B60Q 3/208, B60Q 3/64, B60Q 3/74, F21V 8/00, G02B 6/00

(54) **FAHRZEUGSCHEIBE MIT LICHTQUELLE UND LICHTLEITERSCHICHT**
AUTOMOTIVE WINDOW WITH LIGHT SOURCE AND LIGHT-GUIDING LAYER
VITRAGE D'AUTOMOBILE AYANT UNE SOURCE LUMINEUSE ET UNE COUCHE GUIDE DE LUMIÈRE

(30) Priorität: 03.04.2020 DE 102020109338
(43) Veröffentlichungstag der Anmeldung: 08.02.2023
(73) Patentinhaber: Webasto SE, 82131 Stockdorf (DE)
(72) Erfinder: PASQUARELLI, Robert, 82131 Stockdorf (DE)
(74) Vertreter: advotec.
(86) Internationale Anmeldenummer: PCT/EP2021/058307
(87) Internationale Veröffentlichungsnummer: WO 2021/198262

(56) Entgegenhaltungen:
- EP-A2- 1 195 598
- WO-A1-2013/167832
- WO-A1-2016/113027
- WO-A1-2019/069909
- FR-A1- 2 982 196
- US-A1- 2004 130 882

## Beschreibung

Die Erfindung betrifft ein Fahrzeugdach mit einer Fahrzeugscheibe.

Aus der Praxis ist eine Fahrzeugscheibe bekannt, die insbesondere im Bereich eines Fahrzeugdachs einsetzbar ist. Die Fahrzeugscheibe kann hier ein Festdachelement oder auch ein Deckelelement eines Dachöffnungssystems ausbilden, mittels dessen eine Dachöffnung wahlweise geschlossen oder freigegeben werden kann. Die bekannte Fahrzeugscheibe umfasst einen Scheibenkörper, der gewölbt ausgebildet sein kann und mit einer Lichtleiterschicht versehen ist. Des Weiteren ist bei der bekannten Fahrzeugscheibe eine Lichtquelle vorgesehen, deren Licht in die Lichtleiterschicht einkoppelbar ist. Die Einkopplung erfolgt über einen Rand der Lichtleiterschicht. Die Lichtleiterschicht kann die vom Fahrzeuginnenraum sichtbare Sichtfläche der Fahrzeugscheibe bilden, sodass durch die Lichtleiterschicht bei aktivierter Lichtquelle ein Leuchtelement der Fahrzeugscheibe realisiert ist, mittels dessen ggf. ein Fahrzeuginnenraum ausleuchtbar ist. Die Lichtleiterschicht hat bei der bekannten Fahrzeugscheibe kleinere Abmessungen als der Scheibenkörper, an dessen Innenseite die Lichtleiterschicht angeordnet ist, damit über den Rand der Lichtleiterschicht von der Lichtquelle abgegebenes Licht einkoppelbar ist.

Aus der Druckschrift WO 2019/069909 A1 ist eine Beleuchtungseinrichtung für ein Fahrzeugdach bekannt, die einen Scheibenkörper umfasst, der an einer Großfläche mit einem Einkoppelelement versehen ist. Das Einkoppelelement hat einen keilförmigen Querschnitt und eine Seitenfläche, über die Licht einer Lichtquelle in das Einkoppelelement einkoppelbar ist. Die Lichtquelle ist von der Seitenfläche des Einkoppelelements beabstandet.

Der Erfindung liegt die Aufgabe zugrunde, ein gemäß der einleitend genannten Gattung ausgebildetes Fahrzeugdach zu schaffen, bei der durch die Lichtleiterschicht eine möglichst große Leuchtfläche zur Verfügung gestellt werden kann.

Diese Aufgabe ist erfindungsgemäß durch das Fahrzeugdach mit den Merkmalen des Patentanspruches 1 gelöst.

Gemäß der Erfindung wird also ein Fahrzeugdach vorgeschlagen, bei der das von der Lichtquelle abgegebene Licht über eine Großfläche in die Lichtleiterschicht einkoppelbar ist, und zwar mittels des an der Innenseite der Scheibenkörperanordnung angeordneten Einkoppelelements. Damit ist es möglich, die Lichtleiterschicht hinsichtlich ihrer Abmessungen bzw. ihrer Grundfläche optimiert an die gestellten Anforderungen anzupassen. Zudem wird in die Lichtleiterschicht nur Licht mit bestimmten Einfallswinkeln eingekoppelt. Lichtstrahlen, die außerhalb dieses Bereiches liegen, werden nicht eingekoppelt, sodass sie sich nicht in der Lichtleiterschicht ausbreiten. Dies verbessert die Leuchtkraft und auch die Leuchthomogenität über die Fläche der Lichtleiterschicht. Das Einkoppelelement lenkt also das von der Lichtquelle abgegebene Licht mit definierten Winkeln in die Lichtleiterschicht, womit eine höhere Einkoppeleffizienz erreicht wird.

Grundsätzlich ist das Konzept nach der Erfindung, bei dem an der Innenseite der Scheibenkörperanordnung das Einkoppelelement angeordnet ist, bei Einscheibensicherheitsglas (ESG) und bei Verbundsicherheitsglas (VSG) einsetzbar.

Wenn die Erfindung bei einem Verbundsicherheitsglas Anwendung findet, umfasst die Scheibenkörperanordnung einen Scheibenaußenkörper und einen Scheibeninnenkörper, der über eine Verbindungsschicht an den Scheibenaußenkörper angebunden ist. Der Scheibeninnenkörper bildet die Lichtleiterschicht. In diesem Falle kann das Einkoppelelement direkt an der Innenseite des Scheibeninnenkörpers befestigt sein.

Denkbar ist es natürlich auch, dass bei einem Verbundsicherheitsglas an dem Scheibeninnenkörper eine zusätzliche Lichtleiterschicht aufgebracht ist, in welche das Licht der Lichtquelle mittels des Einkoppelelements einkoppelbar ist.

Bei der Ausführungsform, bei der der Scheibeninnenkörper die Lichtleiterschicht bildet, sind keine zusätzlichen Kosten für das Aufbringen einer Lichtleiterschicht aufzubringen. Zudem ergeben sich durch die Funktionsintegration Gewichts- und Bauraumvorteile. Es ist also möglich, durch die erfindungsgemäße Ausgestaltung mit dem Einkoppelelement mittels des Scheibeninnenkörpers eine flächige Ambient-Light-Funktion bereitzustellen, beispielsweise auch bei einem Festdachelement eines Kraftfahrzeuges.

Der Scheibeninnenkörper, der die gleichen Abmessungen wie der Scheibenaußenkörper haben kann oder auch kleiner ausgebildet sein kann, ist grundsätzlich aus einem beliebigen als Lichtleiter nutzbaren Werkstoff gefertigt. Beispielsweise ist der Scheibeninnenkörper aus einem Werkstoff gefertigt, der Glas und/oder Polycarbonat und/oder einen sonstigen Kunststoff umfasst.

Bei einer als Verbundsicherheitsglas ausgebildeten Scheibenkörperanordnung ist eine Verbindungsschicht zwischen den einzelnen Scheibenkörpern vorzugsweise aus einem Werkstoff gebildet, der PVB, EVA und/oder TPU umfasst. Die Verbindungsschicht kann klar bzw. transparent oder auch gefärbt sein.

Das Einkoppelelement des Fahrzeugdachs nach der Erfindung ist bei einer bevorzugten Ausführungsform leistenartig ausgebildet und vorzugsweise randnah an der Unterseite der Scheibenkörperanordnung angeordnet. Über die Erstreckung des leistenartig ausgebildeten Einkoppelelements kann dann Licht in die Lichtleiterschicht der Scheibenkörperanordnung eingekoppelt werden.

Bei dem Fahrzeugdach nach der Erfindung sind zwei Einkoppelelemente der vorstehend beschriebenen Art vorgesehen, die randnah an einander abgewandten Rändern der Scheibenkörperanordnung an deren Unterseite angeordnet sind.

Um die Einkoppelwinkel des Lichts, das mittels des Einkoppelelements in die Lichtleiterschicht eingekoppelt wird, in optimierter Weise realisieren zu können, hat das Einkoppelelement bei dem Fahrzeugdach nach der Erfindung einen keilförmigen Querschnitt. Damit wirkt das Einkoppelelement nach Art eines optischen Prismas.

Das Einkoppelelement, das insbesondere ein leistenartiger Kunststoffkörper ist, ist vorzugsweise aus einem Werkstoff gefertigt, der PMMA (Polymethylmethacrylat), PC (Polycarbonat), PA (Polyamid), COC (Cycloolefin-Copolymer) oder COP (Cycloolefin-Polymer) umfasst.

Der Brechungsindex des Einkoppelelements ist insbesondere an den Brechungsindex der angrenzenden Lichtleiterschicht angepasst und hat vorzugsweise einen Wert zwischen 1,40 und 1,65 und insbesondere zwischen 1,48 und 1,59.

Die Herstellung des Einkoppelelements erfolgt vorzugsweise nach einem Extrusionsverfahren oder einem Spritzgießverfahren.

Um die innere Reflexion zu verbessern, kann das Einkoppelelement mit einer reflektierenden Beschichtung versehen sein, die Metalle wie Aluminium oder Silber umfassen kann und nach einem Aufdampf- oder Sputterprozess aufgebracht sein kann.

Um das Einkoppelverhalten des Lichts in die Lichtleiterschicht weiter zu verbessern, ist bei einer vorteilhaften Ausführungsform der Fahrzeugscheibe nach der Erfindung zwischen dem Einkoppelelement und der Scheibenkörperanordnung eine Zusatzumlenkstruktur angeordnet. Durch die Zusatzumlenkstruktur kann der Einfallswinkel des Lichts auf die Lichtleiterschicht durch entsprechende Brechung verändert werden, um die innere Reflexion in der Lichtleiterschicht zu erhöhen. Die Zusatzumlenkstruktur kann eine Reihe von asymmetrischen Prismen umfassen, die Abmessungen im Millimeterbereich oder im Mikrometerbereich haben und als dreidimensionales Array oder linienartig angeordnet sind, wie es beispielsweise bei einem Fresnel-Linsen-Array der Fall ist.

Die Zusatzumlenkstruktur kann in einstückiger Weise mit dem Einkoppelelement ausgebildet sein und direkt bei der Fertigung desselben beispielsweise bei einem Extrusionsprozess oder einem Spritzgießprozess ausgebildet werden. Denkbar ist es auch, dass die Zusatzumlenkstruktur eine Beschichtung des Einkoppelelements darstellt, beispielsweise in Form eines separaten strukturierten Films.

Das Einkoppelelement ist über eine Klebeschicht mit dem Scheibenkörper verklebt. Die Klebeschicht, die vorzugsweise einen Brechungsindex zwischen 1,40 und 1,65 und insbesondere zwischen 1,48 und 1,56 hat, kann aus einem beliebigen optisch geeigneten Kleber gebildet sein. Beispielsweise ist die Klebeschicht aus einem drucksensitiven Kleber, einem optisch klaren Flüssigkleber (LOCA = *liquid optical clear adhesive*), EVA (Ethylen-Vinylacetat), PVB (Polyvinylbutyral), TPU (thermoplastischem Polyurethan), einem Epoxy-Kleber oder einem Acrylat-Kleber gebildet.

Die gewählten Werkstoffe haben vorzugsweise Brechungsindizes, die eine Brechung der Lichtstrahlen an den Grenzflächen minimieren und die Einkoppeleffizienz bei den idealen Winkelbedingungen optimieren.

Die Brechungsindizes eines aus Glas gefertigten Scheibeninnenkörpers betragen insbesondere 1,52, wohingegen die Brechungsindizes des Einkoppelelements und des Klebstoffs, mittels dessen das Einkoppelelement an den Scheibeninnenkörper angebunden ist, in Abhängigkeit von dem gewählten Werkstoff variieren können. Bei Einsatz von PMMA für das Einkoppelelement beträgt der Brechungsindex 1,49. Der Klebstoff hat dann beispielsweise einen Brechungsindex von 1,52. Bei Einsatz eines Einkoppelelements aus Polycarbonat beträgt der Brechungsindex beispielsweise 1,58, wohingegen der Brechungsindex des eingesetzten Klebstoffes 1,56 beträgt. Wenn das Einkoppelelement aus COP gefertigt ist, beträgt dessen Brechungsindex 1,52. Vorzugsweise hat dann der Klebstoff, über den das Einkoppelelement an den Glasinnenkörper angebunden ist, ebenfalls einen Wert von 1,52.

Bei einer speziellen Ausführungsform der Fahrzeugscheibe nach der Erfindung ist das Einkopplungselement aus einem Gießharz geformt, das vorzugsweise direkt nach einem Gießverfahren an die Scheibenkörperanordnung angeformt ist. In diesem Falle kann die Lichtquelle, die eine LED-Leiste ist, ein Einlegeteil des Gießharzes sein, d. h. die Lichtquelle kann in das Gießharz eingekapselt sein.

Bei dem Fahrzeugdach nach der Erfindung ist die Lichtquelle direkt an einer Seitenfläche des Einkoppelelements angeordnet. Die insbesondere als Hochleistungs-LED-Modul ausgebildete Lichtquelle ist eine LED-Leiste bzw. ein LED-Streifen mit einer Vielzahl von LEDs, welche ihr Licht direkt in das Einkoppelelement abgeben.

Des Weiteren kann an der Innenseite der Scheibenkörperanordnung ein Verkleidungselement bzw. eine Abdeckung angeordnet sein, welches bzw. welche das Einkoppelelement verblendet. Bei dieser hohen optischen Anforderungen genügenden Ausführungsform können zusätzlich die Lichtquelle und gegebenenfalls der Lichtleiter, mittels dessen das Licht in das Einkoppelelement eingekoppelt wird, hinter der Abdeckung liegen. Die ein Gehäuse bildende Abdeckung kann mit der Scheibenkörperanordnung verklebt sein.

Denkbar ist es auch, dass das Einkoppelelement von einem Formabschnitt aufgenommen ist, der an die Scheibenkörperanordnung angeformt ist und beispielswiese aus einem Polyurethanschaum gefertigt ist. Die reflektierende Beschichtung auf dem Einkoppelelement verhindert in diesem Falle Absorptionsverluste durch den Formabschnitt.

Um zu gewährleisten, dass stets ein optimaler optischer Übergang zwischen dem Einkoppelelement und der Scheibenkörperanordnung gewährleistet ist, ist das Einkoppelelement bei einer speziellen Ausführungsform der Fahrzeugscheibe nach der Erfindung durch das Verkleidungselement und/oder den Formabschnitt in Richtung der Scheibenkörperanordnung gedrückt. Das Verkleidungselement bzw. der Formabschnitt übt also einen Druck auf das Einkoppelelement aus, so dass sichergestellt ist, dass der optische Kontakt zwischen dem Einkoppelelement und der Scheibenkörperanordnung aufrechterhalten wird.

Zur weiteren Verbesserung des Übergangs zwischen dem Einkoppelelement und der Scheibenkörperanordnung ist bei einer speziellen Ausführungsform der Fahrzeugscheibe nach der Erfindung das Einkoppelelement über ein transparentes Immersionsmittel optisch mit der Scheibenkörperanordnung gekoppelt. Zwischen dem Einkoppelelement und der Scheibenkörperanordnung ist also bei dieser Ausführungsform eine beispielsweise filmartige Schicht aus einem optischen Immersionsmittel angeordnet. Das Immersionsmittel kann ein Öl und/oder ein Gel umfassen bzw. aus einem Öl und/oder einem Gel gebildet sein.

Bei einer bevorzugten Ausführungsform der Fahrzeugscheibe nach der Erfindung hat das Immersionsmittel einen Brechungsindex zwischen 1,47 und 1,59 und insbesondere zwischen 1,51 und 1,52, so dass der Brechungsindex an den Brechungsindex eines aus Glas gefertigten Scheibenkörpers der Scheibenkörperanordnung angepasst ist.

Die Viskosität des Immersionsmittels kann zwischen 10 und 50.000 cP liegen.

Weitere Vorteile und vorteilhafte Ausgestaltungen des Gegenstandes der Erfindung sind der Beschreibung, der Zeichnung und den Patentansprüchen entnehmbar.

Ausführungsbeispiele eines Fahrzeugdachs mit einer Fahrzeugscheibe nach der Erfindung sind in der Zeichnung schematisch vereinfacht dargestellt und werden in der nachfolgenden Beschreibung näher erläutert. Es zeigt
- Figur 1: eine schematische Draufsicht auf ein Fahrzeugdach mit einer Fahrzeugschreibe nach der Erfindung;
- Figur 2: einen schematischen Schnitt durch die Fahrzeugscheibe des Fahrzeugdachs nach Figur 1;
- Figur 3: einen Figur 2 entsprechenden Schnitt durch eine zweite Ausführungsform einer Fahrzeugscheibe;
- Figur 4: einen Schnitt durch eine dritte Ausführungsform einer Fahrzeugscheibe;
- Figur 5: einen Schnitt durch eine vierte Ausführungsform einer Fahrzeugscheibe;
- Figur 6: einen Schnitt durch eine fünfte Ausführungsform einer Fahrzeugscheibe;
- Figur 7: einen Schnitt durch eine sechste Ausführungsform einer Fahrzeugscheibe;
- Figur 8: einen Schnitt durch eine siebte Ausführungsform einer Fahrzeugscheibe; und
- Figur 9: einen Schnitt durch eine achte Ausführungsform einer Fahrzeugscheibe.

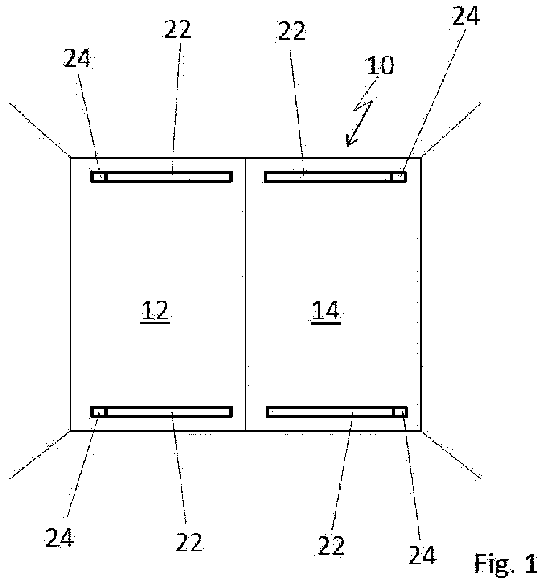

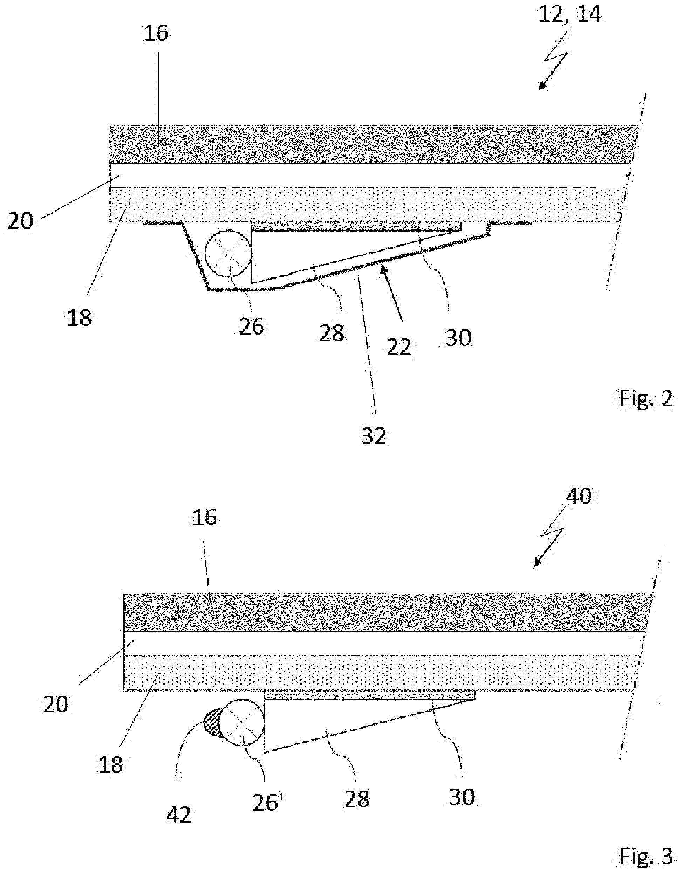

In Figur 1 ist ein Fahrzeugdach 10 eines ansonsten nicht näher dargestellten Kraftfahrzeugs gezeigt. Das Fahrzeugdach 10 ist ein Panoramadach, das ein verstellbares Deckelelement 12 und ein Festdachelement 14 aufweist, welches fest bzw. unbeweglich mit der Fahrzeugkarosserie verbunden ist. Sowohl das Deckelelement 12 als auch das Festdachelement 14 umfassen jeweils ein Glaselement, das eine Fahrzeugscheibe darstellt und das als Verbundsicherheitsglas (VSG) ausgebildet ist, welches mit einer Ambient-Light-Funktionalität versehen ist. Diesbezüglich entspricht der Aufbau des Deckelelements 12 demjenigen des Festdachelements 14. Dieser Aufbau ist in Figur 2 näher dargestellt.

Die jeweils als Fahrzeugscheibe ausgebildeten Dachelemente 12 und 14 umfassen jeweils ein Verbundbauteil, das einen Scheibenaußenkörper 16 und einen Scheibeninnenkörper 18 umfasst. Der Scheibenaußenkörper 16 ist aus einer gewölbten Glasplatte gebildet, die beispielsweise aus einem gefärbten Kalk-Natron-Glas gefertigt ist. Denkbar ist es auch, den Scheibenaußenkörper 16 aus einem Kunststoffelement, beispielsweise einem Polycarbonat-Element auszubilden. Der Scheibeninnenkörper 18 kann ebenfalls aus einem anorganischen Glas, wie einem Kalk-Natron-Glas, oder einem Polymer, beispielsweise einem Polycarbonat gefertigt sein. Des Weiteren bildet der Scheibeninnenkörper 18 im vorliegenden Zusammenhang eine Lichtleiterschicht, in der sich in deren Volumen eingekoppeltes Licht ausbreitet.

Der Scheibenaußenkörper 16 und der Scheibeninnenkörper 18 sind über eine Laminierungsschicht bzw. Verbindungsschicht 20 miteinander verbunden, welche aus einem Werkstoff wie PVB, EVA oder TPU gebildet sein kann. Zudem kann die Verbindungsschicht 20 klar bzw. volltransparent oder auch gefärbt sein. Die Verbindungsschicht 20 hat im vorliegenden Fall eine Dicke von 0,76 mm, kann aber auch eine andere Dicke haben.

Der Scheibenaußenkörper 16 und der Scheibeninnenkörper 18, die im vorliegenden Fall jeweils eine Dicke von etwa 2,1 mm haben, bilden eine Scheibenkörperanordnung mit einer der Fahrzeugumgebung zugewandten Außenseite und einer dem Fahrzeuginnenraum zugewandten Innenseite. An der Innenseite ist die Scheibenkörperanordnung bezogen auf eine vertikale Dachlängsmittelebene beidseits jeweils mit einer Beleuchtungseinrichtung 22 versehen, mittels der die Ambient-Light-Funktionalität realisierbar ist.

Die Beleuchtungseinrichtungen 22 erstrecken sich jeweils in Fahrzeuglängsrichtung und sind am jeweiligen seitlichen Rand des Deckelelements 12 bzw. des Festdachelements 14 angeordnet.

Die Beleuchtungseinrichtungen 22 umfassen jeweils eine Lichtquelle 24, die eine LED-Anordnung umfasst und an einer Stirnseite eines Lichtleiters 26 angeordnet ist, der aus einem Stab oder einer Schnur gebildet ist und beispielsweise einen PMMA-Werkstoff und/oder einen Polycarbonat-Werkstoff umfasst. Die Herstellung des Lichtleiters 26 kann nach einem Extrusionsverfahren oder einem Spritzgießverfahren erfolgen.

Des Weiteren umfassen die Beleuchtungseinrichtungen 22 jeweils ein leistenartiges Einkoppelelement 28, welches sich über die Länge der jeweiligen Beleuchtungseinrichtung 22 erstreckt und vorliegend einen keilförmigen bzw. dreieckigen Querschnitt hat. Die Einkoppelelemente 28 bilden also jeweils einen prismatischen Körper. Dieser ist vorzugsweise aus einem Kunststoffwerkstoff nach einem Extrusionsverfahren oder einem Spritzgießverfahren gefertigt, wobei als Werkstoffe insbesondere PMMA, PC, PA, COC und/oder COP zum Einsatz kommen können, deren Brechungsindizes zwischen 1,48 und 1,59 liegen.

Die Einkoppelelemente 28 sind jeweils über eine Klebeschicht 30 an der Scheibenkörperanordnung fixiert. Die Klebeschicht 30 hat einen Brechungsindex, der im Bereich des Brechungsindexes liegt, den das Einkoppelelement 28 hat, oder der zwischen denjenigen des Einkoppelelements 28 und des Scheibeninnenkörpers 18 liegt, und der insbesondere zwischen 1,48 und 1,56 liegt. Als Werkstoff für die Klebeschicht 30 kann ein drucksensitiver Kleber, ein optisch klarer Flüssigkleber, EVA, PVB, TPU, ein Epoxy-Kleber oder ein Acrylat-Kleber zum Einsatz kommen.

Der Scheibeninnenkörper 18 hat einen Brechungsindex von 1,52.

Des Weiteren sind die Beleuchtungseinrichtungen 22 jeweils mit einem Verkleidungselement 32 versehen, das ebenfalls an der Unterseite der Scheibenkörperanordnung bzw. an der Unterseite des Scheibeninnenkörpers 18 befestigt ist und das Einkoppelelement 28, den Lichtleiter 26 und die Lichtquelle 24 überdeckt.

Bei einer Aktivierung der Lichtquelle 24 wird das von dieser abgegebene Licht in den Lichtleiter 26 eingekoppelt und aus dem Lichtleiter in das Einkoppelelement 28 eingekoppelt. Durch innere Reflexion an den Grenzflächen des Einkoppelelements 28 wird das Licht über die Klebeschicht 30 in den eine Lichtleiterschicht darstellenden Scheibeninnenkörper 18 eingekoppelt, wobei es sich in diesem über innere Reflexion an den Grenzflächen ausbreiten kann. Eine Auskopplung des Lichts aus dem Scheibeninnenkörper 18 in Richtung des Fahrzeuginnenraums kann durch Streuelemente erfolgen, die der Scheibeninnenkörper 18 aufweist. Beispielsweise ist an der Oberseite des Scheibeninnenkörpers 18 eine Bedruckung aufgebracht, welche das Licht in Richtung des Fahrzeuginnenraums streut.

Bei einer alternativen Ausführungsform sind der Lichtleiter 26 und das Einkopplungselement 28 einstückig ausgebildet.

In Figur 3 ist eine Fahrzeugscheibe 40 dargestellt, die weitgehend derjenigen nach Figur 2 entspricht, sich von dieser aber dadurch unterscheidet, dass sie einen Lichtleiter 26' aufweist, der an einer Seitenfläche des Einkoppelelements 28 angeordnet ist und der mit einem zusätzlichen Auskoppelelement 42 versehen ist, das sich über die Länge des Lichtleiters 26 erstreckt. Durch das Auskoppelelement 42 wird das Auskoppeln von Licht aus dem Lichtleiter 26' in Richtung des Einkoppelelements 28 unterstützt. Das Auskoppelelement 42 kann einstückig mit dem Lichtleiter 26' hergestellt sein oder auch eine zusätzliche Struktur sein, die als Bedruckung, als Prismastruktur, als Punktstruktur oder dergleichen ausgebildet ist.

Im Übrigen entspricht die Fahrzeugscheibe 40 derjenigen nach Figur 2.

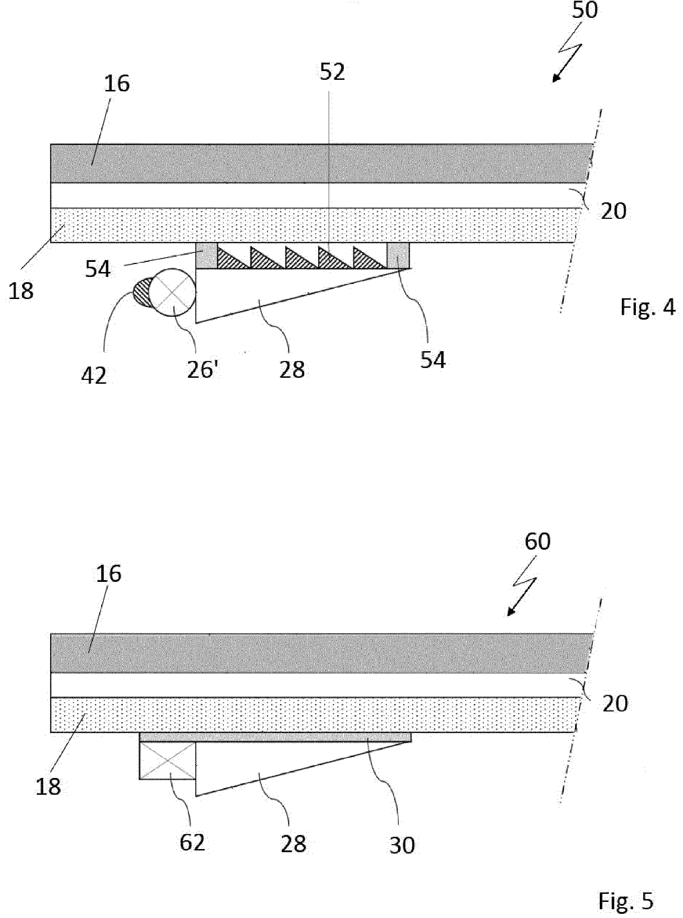

In Figur 4 ist eine Fahrzeugscheibe 50 dargestellt, die weitgehend derjenigen nach Figur 3 entspricht, sich aber von dieser dadurch unterscheidet, dass das Einkoppelelement 28 an seiner der Scheibenkörperanordnung zugewandten Fläche eine Zusatzumlenkstruktur 52 umfasst, die die Einkopplung des in Richtung der Scheibenkörperanordnung abgegebenen Lichts optimiert und die aus Reihen von asymmetrischen Prismen mit Abmessungen im Mikrometerbereich oder Millimeterbereich oder einem Linsen-Array, beispielsweise einem Fresnel-Linsen-Array, gebildet ist. Die Zusatzumlenkstruktur 52 kann eine Beschichtung des Einkoppelelements 28 sein oder auch einstückig mit diesem gefertigt sein. Das Einkoppelelement 28 ist an seinen Rändern über Klebestreifen 54 mit der Unterseite des Scheibeninnenkörpers 18 der Scheibenkörperanordnung verbunden.

Im Übrigen entspricht die Fahrzeugscheibe 50 derjenigen nach Figur 3.

In Figur 5 ist eine Fahrzeugscheibe 60 dargestellt, die wiederum weitgehend derjenigen nach Figur 3 entspricht, sich von dieser aber dadurch unterscheidet, dass sie als Lichtquelle eine LED-Leiste 62 umfasst, die über die Länge des Einkoppelelements 28 eine Vielzahl an LEDs umfasst, deren Licht direkt über eine Seitenfläche in das Einkoppelelement 28 einkoppelbar ist. Die LED-Leiste 62 ist über eine gemeinsame Klebeschicht 30 an die Unterseite des Scheibeninnenkörpers 18 angebunden.

Im Übrigen entspricht die Fahrzeugscheibe 60 derjenigen nach Figur 3.

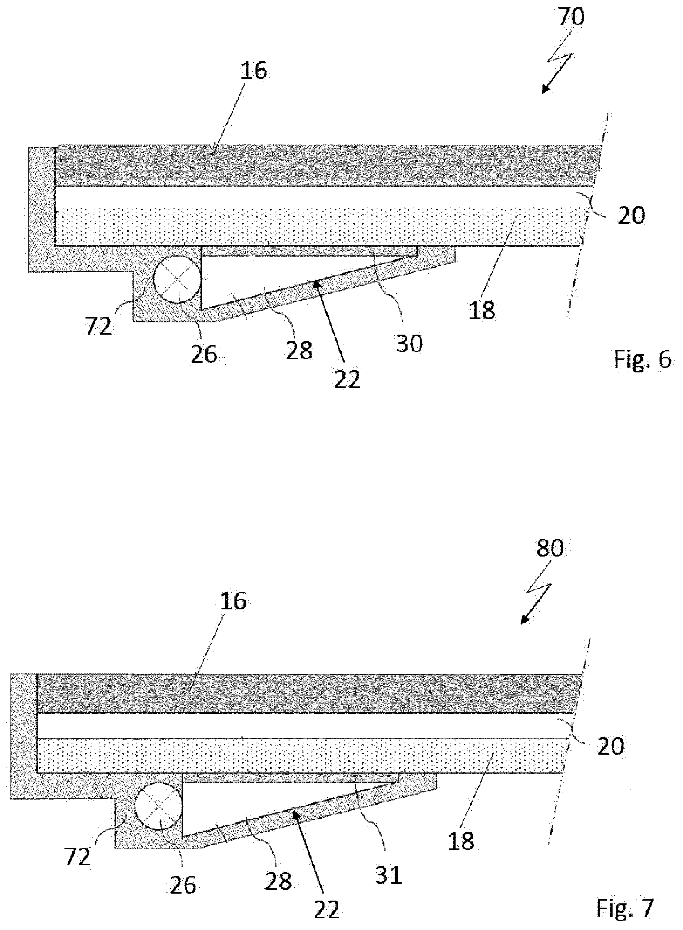

In Figur 6 ist eine Fahrzeugscheibe 70 dargestellt, die weitgehend derjenigen nach Figur 2 entspricht, sich von dieser aber dadurch unterscheidet, dass die Beleuchtungseinrichtung 22, d. h. der Lichtleiter 26 und das Einkoppelelement 28 nicht von einem gehäuseartigen Verkleidungselement 32 abgedeckt sind. Vielmehr sind diese Elemente von einer einen Formabschnitt bildenden Polyurethan-Umschäumung 72 aufgenommen, welche eine Randumschäumung bzw. Randanschäumung der Scheibenkörperanordnung ist, die den Scheibenaußenkörper 16, den Scheibeninnenkörper 18 und die Verbindungsschicht 20 umfasst.

Im Übrigen entspricht die Fahrzeugscheibe 70 derjenigen nach Figur 2.

In Figur 7 ist eine Fahrzeugscheibe 80 dargestellt, welche weitgehend derjenigen nach Figur 6 entspricht, sich von dieser aber dadurch unterscheidet, dass das Einkoppelelement 28 über ein Immersionsmittel 31 an den Scheibeninnenkörper 18 der Scheibenkörperanordnung angebunden ist. Das Immersionsmittel 31 ist filmartig zwischen dem Einkoppelelement 28 und dem Scheibeninnenkörper 18 ausgebildet und hat einen Brechungsindex von 1,51 und eine Viskosität von etwa 30.000 cP. Gehalten wird das Einkoppelelement 28 an dem Scheibeninnenkörper 18 durch die einen Formabschnitt bildende Polyurethan-Umschäumung 72, welche das Einkoppelelement 28 auch gegen den Scheibeninnenkörper 18 drückt, so dass eine optimale optische Kopplung zwischen dem Einkoppelelement 28 und dem Scheibeninnenkörper 18 aufrechterhalten bleibt.

Im Übrigen entspricht die Fahrzeugscheibe 80 mit der das Einkoppelelement 28 und das Immersionsmittel 31 umfassenden Beleuchtungseinrichtung 22 derjenigen nach Figur 6.

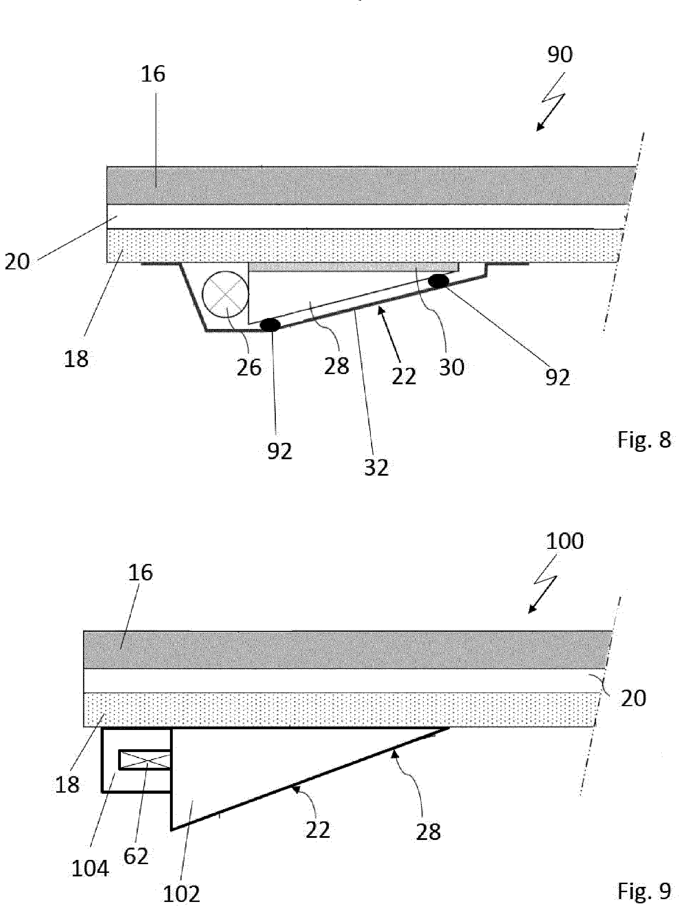

In Figur 8 ist eine Fahrzeugscheibe 90 dargestellt, die weitgehend derjenigen nach Figur 2 entspricht, sich von dieser aber dadurch unterscheidet, dass zwischen dem Verkleidungselement 32 und dem Einkoppelelement 28 Druckelemente 92 angeordnet sind, mittels derer das Verkleidungselement 32 das Einkoppelelement 28 in Richtung des Scheibeninnenkörpers 18 drückt, so dass zwischen dem Einkoppelelement 28 und dem Scheibeninnenkörper 18 stets ein optimaler optischer Übergang gewährleistet bleibt.

Im Übrigen entspricht die Fahrzeugscheibe 90 derjenigen nach Figur 2.

In Figur 9 ist eine Fahrzeugscheibe 100 dargestellt, die weitgehend derjenigen nach Figur 5 entspricht, sich von dieser aber dadurch unterscheidet, dass sie an ihrer Unterseite eine Beleuchtungseinrichtung 22 umfasst, die ein Einkoppelelement 28 aufweist, das aus einem Gießharz gebildet ist, welches direkt an die Unterseite des Scheibeninnenkörpers 18 der Scheibenkörperanordnung angeformt ist. Das Einkoppelelement 28, dessen Einkoppelabschnitt 102 einen dreieckigen bzw. keilförmigen Querschnitt hat, ist in einstückiger Weise mit einem Aufnahmeabschnitt 104 versehen, der als Einlegeteil eine LED-Leiste 62 aufnimmt, die die Lichtquelle der Beleuchtungseinrichtung 22 darstellt.

Im Übrigen entspricht die Fahrzeugscheibe nach Figur 9 derjenigen nach Figur 5.

### Bezugszeichenliste

- 10: Fahrzeugdach
- 12: Deckelelement
- 14: Festdachelement
- 16: Scheibenaußenkörper
- 18: Scheibeninnenkörper
- 20: Verbindungsschicht
- 22: Beleuchtungseinrichtung
- 24: Lichtquelle
- 26, 26': Lichtleiter
- 28: Einkoppelelement
- 30: Klebeschicht
- 31: Immersionsmittel
- 32: Verkleidungselement
- 40: Fahrzeugscheibe
- 42: Auskoppelelement
- 50: Fahrzeugscheibe
- 52: Zusatzumlenkstruktur
- 54: Klebestreifen
- 60: Fahrzeugscheibe
- 62: LED-Leiste
- 70: Fahrzeugscheibe
- 72: PU-Umschäumung
- 80: Fahrzeugscheibe
- 90: Fahrzeugscheibe
- 92: Druckelement
- 100: Fahrzeugscheibe
- 102: Einkoppelabschnitt
- 104: Aufnahmeabschnitt

## Patentansprüche

1. Fahrzeugdach, umfassend eine Fahrzeugscheibe, die eine Scheibenkörperanordnung umfasst, die eine einer Fahrzeugumgebung zugewandte Außenseite und eine einem Fahrzeuginnenraum zugewandte Innenseite hat und die eine Lichtleiterschicht aufweist und die einen Scheibenaußenkörper (16) und einen Scheibeninnenkörper (18) umfasst, der über eine Verbindungsschicht (20) an den Scheibenaußenkörper (16) angebunden ist und der die Lichtleiterschicht bildet, wobei die Scheibenkörperanordnung an ihrer Innenseite, die von der Lichtleiterschicht gebildet ist, bezogen auf eine vertikale Dachlängsmittelebene beidseits jeweils mit einer an einem jeweiligen seitlichen Rand der Fahrzeugscheibe angeordneten Beleuchtungseinrichtung versehen ist, die sich in Fahrzeuglängsrichtung erstreckt und die eine Lichtquelle, deren Licht in die Lichtleiterschicht einkoppelbar ist, und ein Einkoppelelement (28) umfasst, das an der Innenseite der Scheibenkörperanordnung angeordnet ist, das von der Lichtquelle abgegebenes Licht in die Lichtleiterschicht einkoppelt und das über eine Klebeschicht (30) an der dem Scheibenaußenkörper (16) abgewandten Seite des Scheibeninnenkörpers (18) befestigt ist und das einen keilförmigen Querschnitt hat, wobei die Lichtquelle an einer Seitenfläche des Einkoppelelements (28) angeordnet ist und eine LED-Leiste (62) ist.

2. Fahrzeugdach nach Anspruch 1, **dadurch gekennzeichnet, dass** das Einkoppelelement (28) ein für das Licht der Lichtquelle (24) transparenter Materialkörper ist, der vorzugsweise leistenartig ausgebildet ist.

3. Fahrzeugdach nach Anspruch 1 oder 2, **dadurch gekennzeichnet, dass** das Einkoppelelement (28) an seiner der Scheibenkörperanordnung zugewandten Seite mit einer Zusatzumlenkstruktur (52) versehen ist.

4. Fahrzeugdach nach Anspruch 3, **dadurch gekennzeichnet, dass** die Zusatzumlenkstruktur (52) einstückig mit dem Einkoppelelement (28) ausgebildet ist oder eine Beschichtung des Einkoppelelements ist.

5. Fahrzeugdach nach einem der Ansprüche 1 bis 4, **dadurch gekennzeichnet, dass** die Klebeschicht (30) einen drucksensitiven Klebstoff und/oder einen optisch klaren Flüssigkleber und/oder einen Klebstoff, welcher EVA, PVB und/oder TPU umfasst, und/oder einen Epoxy-Kleber und/oder einen Acrylat-Kleber umfasst.

6. Fahrzeugdach nach einem der Ansprüche 1 bis 5, **dadurch gekennzeichnet, dass** das Einkoppelelement (28) aus einem Werkstoff gefertigt ist, der PMMA, PC, PA, COC und/oder COP umfasst.

7. Fahrzeugdach nach einem der Ansprüche 1 bis 6, **dadurch gekennzeichnet, dass** der Scheibeninnenkörper (18) eine Grundfläche hat, die derjenigen des Scheibenaußenkörpers (16) entspricht.

8. Fahrzeugdach nach einem der Ansprüche 1 bis 7, **dadurch gekennzeichnet, dass** der Scheibenaußenkörper (16) aus einem anorganischen Glas und/oder einem Polymerglas gefertigt ist und/oder der Scheibeninnenkörper (18) aus einem anorganischen Glas und/oder einem Polymerglas gefertigt ist.

9. Fahrzeugdachnach einem der Ansprüche 1 bis 8, **dadurch gekennzeichnet, dass** das Einkoppelelement (28) mit einem Verkleidungselement (32) versehen ist und/oder von einem Formabschnitt aufgenommen ist, der an die Scheibenkörperanordnung angebunden ist.

10. Fahrzeugdach nach Anspruch 9, **dadurch gekennzeichnet, dass** das Verkleidungselement und/oder der Formabschnitt das Einkoppelelement (28) in Richtung Scheibenkörperanordnung drücken/drückt, so dass ein optischer Kontakt zwischen dem Einkoppelelement (28) und der Scheibenkörperanordnung aufrechterhalten bleibt.

11. Fahrzeugdach nach einem der Ansprüche 1 bis 10, **dadurch gekennzeichnet, dass** das Einkoppelelement (28) über ein transparentes Immersionsmittel (31) optisch mit der Scheibenkörperanordnung gekoppelt ist.

12. Fahrzeugdach nach Anspruch 11, **dadurch gekennzeichnet, dass** das Immersionsmittel (31) ein Öl und/oder ein Gel umfasst.

## Claims

1. A vehicle roof comprising a vehicle window pane, the vehicle window pane comprising a window pane body assembly, the window pane body assembly having an outer side, which faces a vehicle environment, and an inner side, which faces a vehicle interior, and a light-conducting layer and comprising an outer window pane body (16) and an inner window pane body (18), which is connected to the outer window pane body (16) via a connecting layer (20) and forms the light-conducting layer, wherein, on its inner side, which is formed by the light-conducting layer, the window pane body assembly is provided with an illuminator on either side of a vertical longitudinal center roof plane, the illuminators being disposed on respective lateral edges of the vehicle window pane and extending in the longitudinal vehicle direction and each comprising a light source, the light of which can be coupled into the light-conducting layer, and an input coupling element (28) disposed on the inner side of the window pane body assembly, the input coupling element (28) coupling light emitted by the light source into the light-conducting layer and being attached to the side of the inner window pane body (18) facing away from the outer window pane body (16) via an adhesive layer (30) and having a wedge-shaped cross section, the light source being disposed on a lateral surface of the input coupling element (28) and being an LED bar (62).

2. The vehicle roof according to claim 1, **characterized in that** the input coupling element (28) is a body of material which is transparent to the light of the light source (24) and which is preferably in the shape of a bar.

3. The vehicle roof according to claim 1 or 2, **characterized in that** the input coupling element (28) is provided with an additional deflection structure (52) on its side facing the window pane body assembly.

4. The vehicle roof according to claim 3, **characterized in that** the additional deflection structure (52) is in one piece with the input coupling element (28) or is a coating of the input coupling element.

5. The vehicle roof according to any one of claims 1 to 4, **characterized in that** the adhesive layer (30) comprises a pressure-sensitive adhesive and/or an optically clear liquid adhesive and/or an adhesive comprising EVA, PVB and/or TPU, and/or an epoxy adhesive and/or an acrylic adhesive.

6. The vehicle roof according to any one of claims 1 to 5, **characterized in that** the input coupling element (28) is made of a material comprising PMMA, PC, PA, COC and/or COP.

7. The vehicle roof according to any one of claims 1 to 6, **characterized in that** the inner window pane body (18) has a base area which corresponds to that of the outer window pane body (16).

8. The vehicle roof according to any one of claims 1 to 7, **characterized in that** the outer window pane body (16) is made of an inorganic glass and/or a polymer glass, and/or the inner window pane body (18) is made of an inorganic glass and/or a polymer glass.

9. The vehicle roof according to any one of claims 1 to 8, **characterized in that** the input coupling element (28) is provided with a cladding element (32) and/or accommodated in a molded section which is connected to the window pane body assembly.

10. The vehicle roof according to claim 9, **characterized in that** the cladding element and/or the molded section push/pushes the input coupling element (28) in the direction of the window pane body assembly so that an optical contact between the input coupling element (28) and the window pane body assembly is maintained.

11. The vehicle roof according to any one of claims 1 to 10, **characterized in that** the input coupling element (28) is optically coupled with the window pane body assembly via a transparent immersion agent (31).

12. The vehicle roof according to claim 11, **characterized in that** the immersion agent (31) comprises an oil and/or a gel.

## Revendications

1. Toit de véhicule comprenant une vitre de véhicule, la vitre de véhicule comprenant un ensemble de corps de vitre, l'ensemble de corps de vitre comprenant un côté extérieur, qui est tourné vers un environnement du véhicule, un côté intérieur, qui est tourné vers un intérieur du véhicule, une couche guide de lumière, un corps de vitre extérieur (16) et un corps de vitre intérieur (18), qui est lié au corps de vitre extérieur (16) par une couche de liaison (20) et forme la couche guide de lumière, dans lequel, sur son côté intérieur, qui est formé par la couche guide de lumière, l'ensemble de corps de vitre est muni d'un dispositif d'éclairage des deux côtés d'un plan central longitudinal vertical du toit, les dispositifs d'éclairage étant disposés sur des bords latéraux respectifs de la vitre de véhicule et s'étendant dans la direction longitudinal du véhicule et comprenant chacun une source de lumière, dont la lumière peut être couplée dans la couche guide de lumière, et un élément de couplage (28) disposé sur le côté intérieur de l'ensemble de corps de vitre, l'élément de couplage (28) couplant de la lumière émise par la source de lumière dans la couche guide de lumière et étant fixé au côté du corps de vitre intérieur (18) détourné du corps de vitre extérieur (16) par une couche adhésive (30) et ayant une section transversale en forme de coin, la source de lumière étant disposée sur une surface latérale de l'élément de couplage (28) et étant une barre à DEL (62).

2. Toit de véhicule selon la revendication 1, **caractérisé en ce que** l'élément de couplage (28) est un corps de matériau qui est transparent à la lumière de la source de lumière (24) et qui est, de préférence, en forme d'une barre.

3. Toit de véhicule selon la revendication 1 ou 2, **caractérisé en ce que** l'élément de couplage (28) est muni d'une structure de déviation additionnelle (52) sur son côté tourné vers l'ensemble de corps de vitre.

4. Toit de véhicule selon la revendication 3, **caractérisé en ce que** la structure de déviation additionnelle (52) est intégrale avec l'élément de couplage (28) ou est un revêtement de l'élément de couplage.

5. Toit de véhicule selon l'une quelconque des revendications 1 à 4, **caractérisé en ce que** la couche adhésive (30) comprend un adhésif sensible à la pression et/ou un adhésif liquide optiquement claire et/ou un adhésif comprenant de l'EVA, du PVB et/ou du TPU, et/ou un adhésif époxy et/ou un adhésif acrylique.

6. Toit de véhicule selon l'une quelconque des revendications 1 à 5, **caractérisé en ce que** l'élément de couplage (28) est fait à partir d'un matériau comprenant du PMMA, du PC, du PA, du COC et/ou du COP.

7. Toit de véhicule selon l'une quelconque des revendications 1 à 6, **caractérisé en ce que** le corps de vitre intérieur (18) a une aire de base qui correspond à celle du corps de vitre extérieur (16).

8. Toit de véhicule selon l'une quelconque des revendications 1 à 7, **caractérisé en ce que** le corps de vitre extérieur (16) est en verre inorganique et/ou en verre polymérique, et/ou le corps de vitre intérieur (18) est en verre inorganique et/ou en verre polymérique.

9. Toit de véhicule selon l'une quelconque des revendications 1 à 8, **caractérisé en ce que** l'élément de couplage (28) est muni d'un élément d'habillage (32) et/ou logé dans une partie moulée qui est liée à l'ensemble de corps de vitre.

10. Toit de véhicule selon la revendication 9, **caractérisé en ce que** l'élément d'habillage et/ou la partie moulée pousse(nt) l'élément de couplage (28) dans la direction de l'ensemble de corps de vitre de sorte qu'un contact optique entre l'élément de couplage (28) et l'ensemble de corps de vitre est maintenu.

11. Toit de véhicule selon l'une quelconque des revendications 1 à 10, **caractérisé en ce que** l'élément de couplage (28) est couplé optiquement avec l'ensemble de corps de vitre par l'intermédiaire d'un agent d'immersion (31) transparent.

12. Toit de véhicule selon la revendication 11, **caractérisé en ce que** l'agent d'immersion (31) comprend un huile et/ou un gel.
